# EUROPEAN PATENT SPECIFICATION

(11) **EP 0 534 740 B1**
(45) Date of publication and mention of the grant of the patent: **23.04.1997**
(21) Application number: 92308677.1
(22) Date of filing: 23.09.1992
(51) Int. Cl.: G05B 19/18, B24B 13/06, B23Q 1/00

(54) **Lathe for generating ophthalmic products from blanks, and a method of operating the lathe**
Drehbank zur Erzeugung von ophthalmischen Produkten aus Rohlingen und Verfahren zum Betrieb der Drehbank
Tour pour générer des produits ophtalmiques à partir de flans et procédé pour actionner le tour

(30) Priority: 27.09.1991 US 766394
(43) Date of publication of application: 31.03.1993
(73) Proprietor: COBURN OPTICAL INDUSTRIES, INC., Tulsa, Oklahoma 74146 (US)
(72) Inventor: Brennan, William D., Tulsa, Oklahoma 74137 (US); Kulan, Stephen, Highland, Indiana 46322 (US); Hyslop, Ronald T., Tulsa, Oklahoma 74137 (US); Ellis, Johnny, Broken Arrow, Oklahoma 74014 (US); Gregory, Ray, Muskogee, Oklahoma 74403 (US); Penner, Larry, Wagoner, Oklahoma 74467 (US); Hays, James K., Tulsa, Oklahoma 74146 (US)
(74) Representative: Jenkins, Peter David

(56) References cited:
- US-A- 3 589 078
- US-A- 4 210 038
- US-A- 4 989 316

## Description

The present invention relates to a lathe for use in the generation of products from blanks in the ophthalmic industry, and, in particular, to a lathe for use in the generation of visual lenses, such as spectacle lenses and contact lenses,and lap tools for use in the ophthalmic industry. The invention also relates to a method of operating such a lathe.

U.S. Patent 4,989,316 discloses a machine for generating spectacle lenses and laps which may include a toric surface finish. In this particular case the generation is achieved by means of a milling tool which acts on a rotating workpiece. The relative position of the milling cutter to the workpiece, both linearly and angularly, is controlled by a computer, where the linear position of the milling cutter is controlled along the rotational axis in response to (i) the angular position of the workpiece with respect to a reference plane, and (ii) the displacement of the cutter from the rotational axis.

The drawbacks of the above configuration of generating machine for ophthalmic products are two-fold, and as follows:
1) The finish generated on a lens by a milling cutter is coarse in nature. Consequently, extensive fining and polishing of the surface has to be employed. As will be well appreciated by those in the industry, the fining and polishing employed with visual lenses such as spectacle lenses involves a lap tool which is moved in short stroke motions across the surface being polished. No matter how good a match the surface of the lens is to the surface of the lap, a coarsely generated lens surface will take longer to fine and polish than a more finely produced surface; and
2) Where the angular displacement of the workpiece is used to drive the linear displacement/ alignment of the workpiece with respect to the milling cutter, the control of the machine is necessarily time-consuming and inherently prone to inbuilt following error. One of the reasons for this is that the speed of rotation of the workpiece and the distance from the tool to the workpiece rotational axis are independently controlled, requiring the third and final axis to be highly responsive to the variations of first two axes. A consequence of this is that the generator described is reactive and not proactive. Thus, if the independent axes are inaccurate, the third must react in a highly reactive manner.

EP-A-420 244 describes a lathe for machining a non-circular workpiece, wherein the profile data of plural sections of the workpiece stored in a profile data storage means are transformed into frequency functions of l to n degree which are a function of the angular velocity of the workpiece.

The present invention is concerned with providing a lathe type generator of visual lenses (such as contact lenses or spectacle lenses), and lap tools in which the drawbacks detailed above are overcome or alleviated.

In accordance with the present invention there is provided a lathe for use in the generation of ophthalmic products from blanks comprising:
a) a mechanism to rotate a blank about an axis of rotation;
b) a cutter tool for imparting the desired surface configuration onto the rotating blank;
c) a first moving mechanism for effecting relative movement between the cutter tool and the blank in a first direction oriented parallel to the axis of rotation of the blank;
d) a second moving mechanism for effecting relative movement between the cutter tool and the blank in a second direction oriented transversely to the first direction; and
e) a digital electronic device connected to the rotating mechanism and to the first and second moving mechanisms for supplying control signals controlling the angular displacement of the blank with respect to a . reference plane containing the blank, and controlling the movement of the cutter tool in the first and second directions, such that the movements of the cutter tool in the first and second directions and the angular displacement of the blank about the axis of rotation are all controlled independently of one another by means of control signals supplied at regular time intervals.

A lathe made in accordance with the present invention is normally, but not exclusively, used to generate complex surface shapes in blanks which extend transversely to (substantially perpendicular to) the axis of rotation of the blank.

The use of a lathe in the generation of surfaces of which the cleanliness and quality of the cut is highly important, has distinct advantages over the use of other tools such as milling tools. Importantly, the lathe can be set up so that the surface as cut by the lathe may need no further processing before use. This is of particular advantage when generating visual lenses, as it reduces the requirement to polish the lens, and thereby minimizes any errors and cost resulting from the polishing of the lens in a lapping machine.

Clearly, the actual quality of the surface finish generated by the lathe is dependent upon the infeed rate of the cut on the surface of the blank. However, to counterbalance the advantages of a usable cut surface it also has to be taken into account that the slower the cutter infeed rate the longer is the time required for the generation of the surface by the lathe. Consequently, a reasonable balance has to be achieved so that the generation of the surface is relatively quick, and the quality of the surface is sufficiently good so as to minimize subsequent downline operations.

As a general guideline, as will be well appreciated by those skilled in the art, the quality of the surface finish of a lap tool does not have to be as high as with a visual lens. Therefore, a greater infeed rate, and consequently, a faster cycle time, can be utilized with the lathing of lap tools. Further, it should be noted that the cycle time and the infeed rate can also be balanced by adjusting the number of passes of the cutter over the surface of lens or lap tool used to generate the surface thereon.

In a preferred embodiment of the present invention, the means to locate and move the cutter tool along a first axis, and the means to locate and move the cutter tool along a second axis serve to locate and move the cutter tool in directions perpendicular to one another.

A lathe made in accordance with the present invention can be used to generate a large number of so-called complex surface shapes, for example, symmetrical aspheric, non-symmetrical aspheric, torics, and can be used to generate simple surface configurations, for example, a spherical shape, as well as surfaces disposed at various angles to the axis of rotation (prism).

In one particular mode of operation of the lathe made in accordance with the present invention, it is envisioned that the rate of displacement of the cutter tool along the second axis will be substantially constant, while the displacement of the cutter tool along the first axis will be varied accordingly to generate the required surface.

It will be well appreciated by those skilled in the art that this is only one particular way of operating the lathe to generate a surface on the blank.

In an alternative more complex procedure the rate of displacement of the cutter tool along the second axis may be varied, but the generation action is always in one direction, in addition to the oscillatory motion of the cutter tool along the first axis.

With regard to certain materials, in particular plastically behaving materials, for example, thermoplastics and metals, in order to effect a clean and effective cut of the blank surface, the instantaneous surface speed of the blank relative to the cutter tool has to be maintained above a surface speed threshold value. However, with regard to materials such as thermo-setting plastics like CR39® which do not melt, and glass which is an amorphous material with a high melting point this threshold surface speed is not so critical.

Now when that fact is combined with the fact that as the cutter tool approaches the axis of rotation of the blank, the instantaneous surface speed of the blank relative to the cutter tool diminishes (assuming that the blank is being rotated at a constant angular velocity). In fact, assuming that the angular velocity of the blank is maintained as a constant, the actual instantaneous surface speed is proportional to the distance from the axis of the rotation of the blank.

The net effect of these two factors with regard to plastically behaving materials means that at some point on the surface of the blank the instantaneous surface velocity will fall below the threshold value. In order to eliminate or reduce the problems this will cause, several courses of action may be adopted, such as:
1) Rotate the blank at a very high velocity at all times. This will require a highly expensive and heavy motor. Further, the higher the speed of operation, the more responsive and controllable the lathe has to be in all other operations to prevent error in the surface generated.
2) Use a rotary tool, such as a milling tool. This requires an additional motor, and (as discussed above) the quality of the finish provided is far less directly usable, leading to the definite requirement of further and longer manufacturing procedures.
3) Vary the speed at which the blank is rotated, as a function of the amount of displacement of the cutter tool from the axis of rotation.

In a preferred embodiment of the present invention, the angular velocity of the blank is proportionally varied with respect to the displacement of the cutter tool from the axis of rotation of the blank.

The above adopted preferred embodiment of the present invention has the distinct advantages that:
1) the accuracy of the generation operation can be maintained;
2) the quality of the finished cut surface on plastically behaving materials can be maintained so that the generated surface is more directly usable; and
3) the cycle time for generating a lens is reduced.

In a preferred embodiment of the present invention, each of the means to locate and move the cutter tool along the first and second axis comprises:
i) two parallel disposed rails on a first body and two parallel disposed guides on a second body which rails and guide interact with each other to limit movement to one desired direction only;
ii) a drive shaft mounted on the first body driven by a motor to provide the drive and locating force for the second body;
iii) a drive transmission element mounted on the second body to transfer the motion from the drive shaft to the second body.

Preferably, the drive shaft is a screw threaded drive shaft.

Alternatively, a hydraulic cylinder, linear motor, voice coil motor or other form of linear actuator could be used.

A lathe made in accordance with the present invention will normally include a main support case upon which a majority of the working components are mounted. In accordance with one particular arrangement of the present invention, the means to locate, and move, the cutter tool along a first axis parallel to the axis of rotation of the blank is mounted upon the support case of the lathe, which support case acts as the first body, and the second body comprises a block located thereon by the interaction of the rails and guides; and the means to locate, and move the cutter tool along a second axis perpendicular to the first axis, is mounted to the block, which block acts as the first body for the second location and movement means with the second body comprising the cutter tool.

Preferably, the cutter tool is normally mounted in a suitable mounting block that is located or moved by the means to locate, or move, the cutter tool.

Preferably, the cutter tool employed is a cutter tool that provides a point cutting contact with the blank. Most preferably, the cutter tool is a diamond type cutter tool.

The digital electronic system is used to control the location of the cutter tool in space in respect of the angular position of the blank.

Further, the digital electronic system can be used to calculate the actual curve shapes to be generated onto the blank surface from information provided thereto by the operator. In a preferred embodiment of the present invention this will be time based point data that iscalculated by the digital electronic system.

The invention also relates to a method of operating the lathe.

The invention will now be described by way of description, of an example of a lathe made in accordance with the present invention, as illustrated in the accompanying drawings, in which:
FIG. 1 is a schematic plan view of a first embodiment of a lathe in accordance with the present invention;
FIG. 2 is a schematic side view of the lathe shown in FIG. 1 of these drawings;
FIG. 2A is a fragmentary cross-sectional view taken along the line 2A-2A in FIG. 2;
FIG. 3 is a schematic plan view of a second embodiment of a lathe in accordance with the present invention; and
FIG. 4 is a schematic side view of the lathe shown in FIG. 3 of the drawings, with a portion thereof broken away.

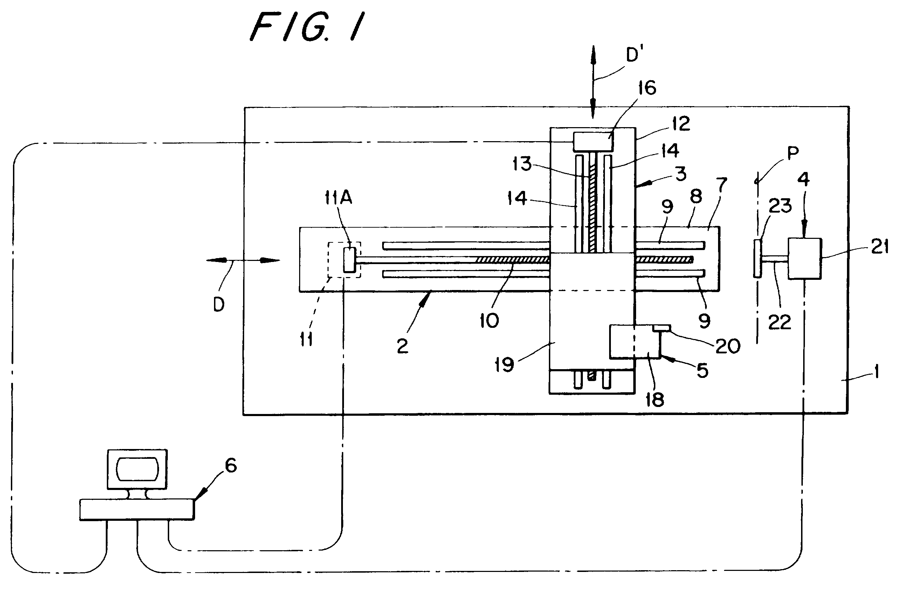

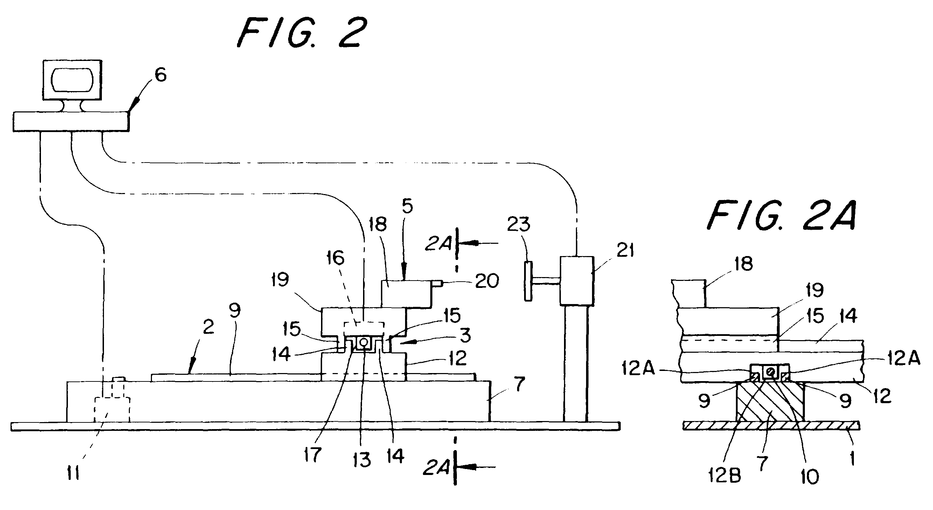

Referring to FIGS. 1 and 2 of the accompanying drawings, there is shown a schematic representation of a lathe made in accordance with the present invention.

The lathe to be described is primarily intended, when set up, to cut complex surfaces, such as aspheric and toric shaped surfaces on surfaces rotating in a plane oriented transversely to the axis of rotation of a blank/workpiece. However, it should be understood that this is in no way intended to limit the application of the present invention and, therefore, the scope of the invention claimed herein.

The lathe is mounted on a support base 1 and comprises:
a) a first location and movement arrangement 2;
b) a second location and movement arrangement 3 allowing movement in a direction (or along an axis) oriented transverse to the direction (or axis) allowed by the first location and movement arrangement;
c) a workpiece or blank mounting arrangement 4;
d) a cutting tool mounting means 5; and
e) a digital electronic system 6.

The first location and movement arrangement 2 includes:
i) a support 7 having a substantially flat upper surface 8, which support 7 is affixed to the support base 1;
ii) two parallel rails 9 mounted on the upper surface 8 of the support 7 so as to allow movement in one predetermined direction only;
iii) a screw threaded drive shaft 10 mounted between, and parallel with, the two mounted rails 9;
iv) a driver motor 11 mounted below the surface 8 and drivingly connected to the screw threaded drive shaft 10 by a transmission 11A; and
v) a block 12 which includes a pair of parallel guide channels 12A through which the rails 9 pass (see FIG. 2A) and a threaded member 12B with which the drive shaft 10 is threadedly connected such that rotation of the shaft 10 produces movement of the block means 12 in a first direction D toward and away from the mounting arrangement 4.

The screw threaded drive shaft 10 is provided with a close pitch screw thread in order to provide high accuracy in the positioning of the means moved by the first movement arrangement.

The second movement arrangement 3 includes:
i) the block means 12;
ii) a positioning member 19;
iii) two parallel mounted guides 15 affixed to the lower surface of the positioning member 19 (see FIG. 2) and positioned so as to engage with two parallel rails 14 mounted on a top surface of the block means 12;
iv) a screw threaded drive engaging means 17 provided on the lower surface of the positioning member 19, which drive engaging means 17 engages with a screw threaded shaft 13 mounted on the block means 12 parallel to the rails 14; and
v) a driver motor 16 drivingly connected to the second screw threaded drive shaft 13.

The screw shaft 13 and rails 14, 15 are oriented perpendicular to the screw shaft 10 and rails 9, so that actuation of the motor 16 causes the positioning member 19 to be displaced in a second direction D' perpendicularly to the first direction D.

The cutter tool mounting means 5 comprises a tool block 18 secured to the upper surface of the positioning member 19, and which carries a lathe cutter tool 20.

The lathe cutter tool 20 is calibrated to the lathe in the standard fashion and no further explanation is needed, or will be given as to this aspect.

The workpiece mounting arrangement 4 includes a standard workpiece carrying chuck 23 which is very similar to that provided in a majority of lathes. A driver motor 21 turns a spindle 22 that carries the chuck and is mounted at the appropriate height so that when lathing or generation is underway the blank/workpiece engages with the lathe cutter tool 20 under the control of the digital electronic system 6.

The overall operational control of the lathe is effected by means of the digital electronic system 6. The digital electronic system 6 is connected to the driver motors 11, 16 and 21, and acts to control the position of the block means 12 on the fixed rails 9 as well to control the position of the positioning member 19 on the fixed rails 14 of the block means 12 by controlling the drives to the respective screw threaded shafts 10, 13. The digital electronic system 6 also regulates the rotation of the spindle 22 to control the angular position of the workpiece/blank being operated upon by the lathe, with reference to a defined plane P defined by the blank/workpiece.

It will be appreciated by those skilled in the art that the action of the two arrangements 2, 3 of parallel mounted rails and parallel mounted guides interacting with each other in transverse (perpendicular) directions in effect means that within the confines of the lathe the lathe cutter tool 20 can be located anywhere in the defined plane.

Normally, the blank/workpiece is generated or worked upon from the outside inwards towards the center of the blank/workpiece, i.e., towards the axis of rotation of the blank/workpiece. Now, assuming a constant angular velocity for the blank/workpiece as the lathe cutter tool 20 approaches the axis of rotation, the relative surface speed of the portion of the blank/workpiece engaged by the lathe cutter tool 20 diminishes.

This does not pose a problem when cutting certain materials, such as thermosetting materials. However, in order to effect a clean and useful cut of the blank/workpiece when cutting a plastically behaving material such as polycarbonate or aluminum, the relative speed of the blank/workpiece to the lathe cutter tool 20 has to be maintained above a threshold value; thus, it is clear that problems may arise.

To maintain sufficient surface speed, shorten the cycle time, and improve the surface finish, the angular velocity is accelerated during the cutting operation. In fact, the speed of rotation of the spindle 22 is increased as the lathe cutter tool 20 approaches the axis of rotation.

In the actual operation of lathe, the operator keys-in certain required criteria to the digital electronic system. This data includes: the type of material to be worked upon, the type of curve required (concave or convex), and the prescription information relating to the curve to be generated. The digital electronic system from this information has, or generates using algorithms, the control data it requires to effect control of the cutting operation.

During the actual cutting operation, the digital electronic system supplies at regular intervals, e.g., every 2 to 4 milliseconds, appropriate drive signals to the motors 11, 16 and 21 controlling the spatial and angular relationship of the blank/workpiece to the lathe cutter tool 20 so that the required surface shape is generated.

During the cutting of a workpiece formed of a plastically behaving material the following criteria are normally applied to the movement of the lathe cutter tool 20 and the rotation of the blank/workpiece:
--- the rotational velocity of the blank/workpiece is steadily increased as the lathe cutter tool approaches the axis of rotation of the blank/workpiece;
--- the movement (displacement) of the lathe cutter tool 20 by the second location and movement arrangement 3 is at a constant in-feed; and
--- the movement (displacement) induced in the lathe cutter when generating a toric curve in a surface is oscillatory in nature, i.e., contains both positive and negative drive movements in the direction parallel to the axis of rotation of the blank/workpiece.

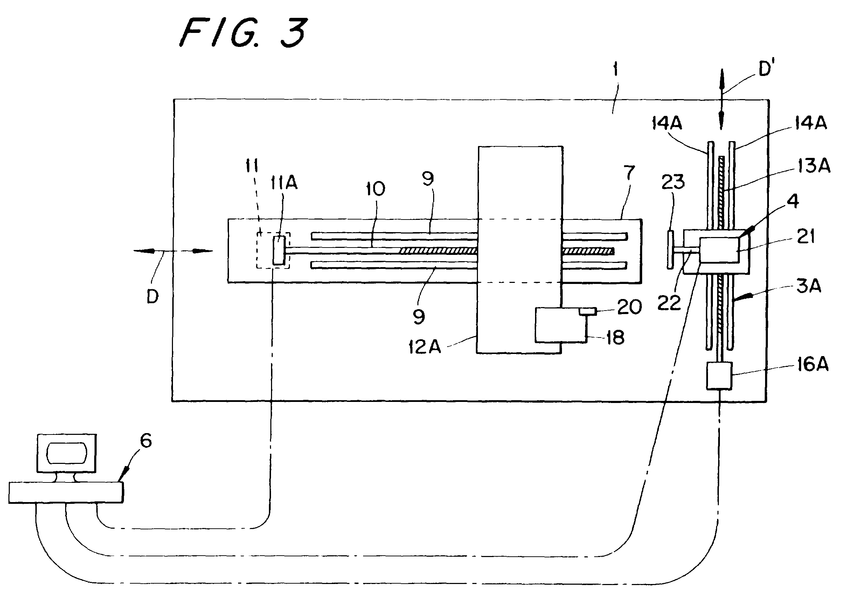

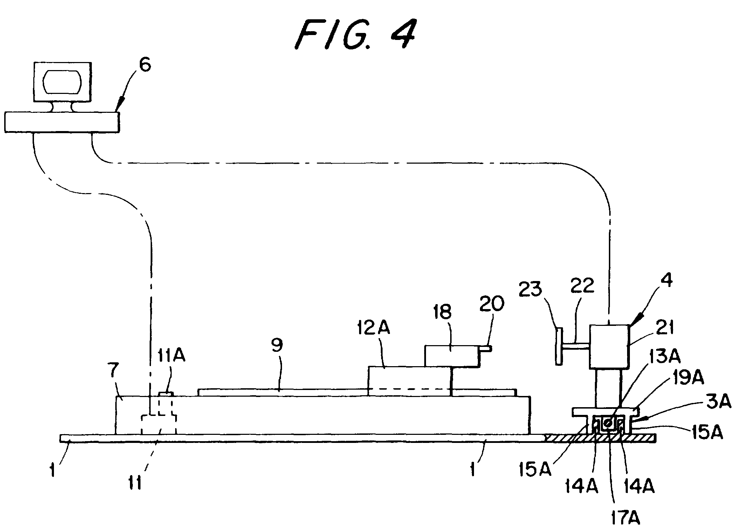

Now referring to FIGS. 3 and 4 of the accompanying drawings there is shown a second example of a lathe in accordance with the present invention.

This second example of a lathe is very similar to that shown in FIGS. 1 and 2 of the accompanying drawings and for this reason the same numerals have been used to indicate like components.

The lathe shown in FIGS. 3 and 4 of the accompanying drawings differs from that shown in FIGS. 1 and 2 with respect to the means used to locate and move the cutter tool with respect to the blank/workpiece. In particular, the second location and movement arrangement 3A which allows movement in a direction transverse to the direction allowed by the first location and movement arrangement, i.e., transverse to the axis of rotation of the workpiece/blank, differs from that in FIGS. 1 and 2.

In this particular example of a lathe made in accordance with the present invention the second location and movement arrangement 3A comprises:
--- two parallel rails 14A mounted on the support base 1; and
--- two parallel guides 15A mounted on a block member 19A.

The workpiece or blank mounting arrangement 4 is located on the block member 19A. Consequently, in operation, the block means 12A and the cutter tool are moved only in a direction D parallel to the axis of rotation of the blank/workpiece with respect to the support base 1, and the blank/workpiece is moved in a direction transverse (in fact in this case perpendicular) to the axis of rotation of the blank/workpiece with respect to the support base 1. The combination of these two motions means that with respect to the blank/workpiece, the cutter tool is moved in two directions, i.e., parallel to the axis of rotation of the workpiece/blank and transversely to the axis of rotation of the workpiece/blank.

A lathe made in accordance with either of the above described embodiments of the present invention can have a number of operational criteria placed upon it, for example, the lathe may be built/designed to cut:
1) visual lenses only; or
2) laps-plastic lap tools only; or
3) laps-aluminum lap tools only; or
4) lap tools, plastic or aluminum; or
5) visual lenses and lap tools (aluminum or plastic).

The actual operational criteria placed on the lathe, although it will not have a drastic effect on the basic conceptual design of the lathe, will have a very marked effect on the performance criteria of the lathe and the actual equipment used therein.

### EXAMPLE 1:

The above-mentioned design and general configuration of a lathe when adapted for use in the generation of lap tools, including the generation of aluminum laps, is provided with a motor 21 which rotates the blank/workpiece at a speed in the range of 75 to 100 revolutions per minute.

Further, in this particular application the actual quality of the cut surface is not of absolute criticality and the rate of rotation of the blank/workpiece may be maintained constant for the movement of the lathe cutter tool 20 along the second axis.

### EXAMPLE 2:

The above-mentioned design and general configuration of a lathe when adapted for use in the generation of visual lenses, such as plastic lenses made from CR39® or polycarbonate or any suitable high index plastic, is provided with a motor 21 whose rate of rotation of the blank/workpiece is at a speed in the order of 50 to 2750 revolutions per minute dependent upon the position of the lathe cutter tool 20 relative to the axis of rotation of the blank/workpiece.

Thus, mostly in order to reduce cycle time and still be able to cut the edges well, the variation in rotational velocity is a function of:
a) cylinder power,
b) prism,
c) decentration,
d) other surface parameters that intensify the rotationally asymmetric nature of the surface to be produced.

The actual degree of variation in the rate of rotation of the blank/workpiece as the lathe cutter tool 20 moves along the second axis towards the axis of rotation of the blank/workpiece depends on the type of surface being cut, for example:
a) a toric surface cut
   --- from 50 rpm at the edge
   --- to 800 rpm at the center
b) a non-rotational symmetric aspheric lens cut
   --- from 50 rpm at the edge
   --- to 800 rpm at the center
c) a spheric or rotationally symmetric aspheric lens cut at a constant 2750 rpm.

## Claims

1. A lathe for generating ophthalmic products from blanks, comprising:
rotating means (4) for rotating a blank about an axis of rotation;
a cutter tool (20) for imparting a desired surface configuration onto the rotating blank;
first moving means (2) for effecting relative movement between said cutter tool and the blank in a first direction (D) oriented parallel to said axis of rotation of the blank;
second moving means (3) for effecting relative movement between said cutter tool and the blank in a second direction (D') oriented transversely to said first direction; and
digital electronic means (6) connected to said rotating means and to said first and second moving means for supplying control signals controlling the angular displacement of the blank with respect to a reference plane (P) containing the blank, and controlling the movement of the cutter tool in said first and second directions, such that the movements of said cutter tool along said first and second directions and the angular displacement of the blank about said axis of rotation are all controlled independently of one another by means of control signals supplied at regular time intervals.

2. A lathe according to claim 1, wherein said first (D) and second (D') directions are oriented perpendicular with respect to one another.

3. A lathe according to claim 1 or 2, wherein said digital electronic means (6) constitutes means for inducing an oscillatory type of motion in the movement of said cutter tool (20) in said first direction (D) to generate a complex surface shape into the surface of the blank.

4. A lathe according to claim 1 or 2, wherein said digital electronic means (6) constitutes means for maintaining constant the rate of displacement of said cutter tool (20) in said second direction (D') relative to the rate of angular displacement of the blank, and for varying the displacement of the cutter tool in said first direction (D) in accordance with the particular shape being generated in the surface of the blank.

5. A lathe according to claim 1 or 2, wherein said digital electronic means (6) constitutes means for varying the rate of displacement of said cutter tool (20) in said second direction (D') wherein the generation action is only in one direction, in addition to the oscillatory motion of the cutter tool in the first direction (D).

6. A lathe according to claim 1 or 2, wherein said digital electronic means (6) constitutes means for varying the rate of angular displacement of the blank proportionately with respect to the displacement of the cutter tool (20) from said axis of rotation of the blank.

7. A lathe according to any one of the preceding claims, wherein each of said first (2) and second (3) moving means comprises:
two parallel disposed rails (9, 14) on a first body (7, 12) and two parallel disposed guides (12A, 15) on a second body (12, 19), which rail and guides interact with each other to limit movement to one direction only, said directions being oriented transversely to one another;
a drive shaft (10, 13) mounted on the first body driven by a motor (11, 16) to provide the drive and locating force for the second body; and
a drive transmission element (11A) mounted on the second body to transfer the drive from the drive shaft to the second body.

8. A lathe according to claim 7, wherein the drive shaft (10, 13) is a screw threaded drive shaft.

9. A lathe according to claim 7 or 8, wherein the lathe includes a main support base (1) and said first moving means (2) is mounted upon said support base, which support base constitutes said first body thereof, and said second body (12) of said first moving means comprises a block located on said first body; and said second moving means (3) is mounted on said block, which block constitutes sand first body of said second moving means and the second body (19) thereof comprises a carrier of said cutter tool (20).

10. A lathe according to any one of the preceding claims, wherein said cutter too (20) provides a point cutting contact with the blank.

11. A lathe according to claim 10, wherein the cutter tool (20) is a diamond tipped cutter tool.

12. A method of operating a lathe for generating ophthalmic products from blanks, comprising the steps of:
rotating a blank about an axis of rotation;
effecting relative movement between said cutter tool (20) and the blank in a first direction (D) oriented parallel to said axis of rotation of the blank;
effecting relative movement between said cutter tool and the blank in a second direction (D') oriented transverse to said first direction; and
supplying signals from a digital electronic means (6) for controlling the angular displacement of the blank with respect to a reference plane (P) containing the blank and for controlling the movement of the cutter tool in said first and second directions, whereby the movements of said cutter tool in said first and second directions and the angular displacement of the blank about said axis of rotation are all controlled independently of one another by means of control signals supplied at regular time intervals.

## Patentansprüche

1. Drehbank für die Herstellung von augenoptischen Produkten aus Rohlingen, mit:
- Drehmitteln (4) zum Drehen eines Rohlings um eine Drehachse;
- einem Schneidwerkzeug (20), das dazu dient, dem sich drehenden Rohling eine gewünschte Oberflächenkonfiguraüon zu verleihen;
- ersten Bewegungsmitteln (2) zum Bewirken einer Relativbewegung zwischen dem Schneidwerkzeug und dem Rohling in einer ersten Richtung (D), die parallel zu der Drehachse des Rohlings ausgerichtet ist;
- zweiten Bewegungsmitteln (3) zum Bewirken einer Relativbewegung zwischen dem Schneidwerkzeug und dem Rohling in einer zweiten Richtung (D'), die quer zu der ersten Richtung ausgerichtet ist; und
- digital-elektronischen Mitteln (6), die mit den Drehmitteln und den ersten und zweiten Bewegungsmitteln verbunden ist, um Steuersignale zuzuführen, die die Winkelverschiebung des Rohlings in bezug auf eine den Rohling enthaltende Referenzebene (P) und die Bewegung des Schneidwerkzeuges in der ersten und der zweiten Richtung derart steuern, daß die Bewegungen des Schneidwerkzeuges längs der ersten und der zweiten Richtung und die Winkelverschiebung des Rohlings um die Drehachse alle mit Hilfe von Steuersignalen, die in gleichmäßigen Zeitintervallen zugeführt werden, unabhängig voneinander gesteuert werden.

2. Drehbank nach Anspruch 1, dadurch **gekennzeichnet**, daß die erste (D) und die zweite (D') Richtung rechtwinklig zueinander ausgerichtet sind.

3. Drehbank nach Anspruch 1 oder 2, dadurch **gekennzeichnet,** daß das digital-elektronische Mittel (6) Mittel darstellt, die dazu dienen, eine oszillationsartige Bewegung in der Bewegung des Schneidwerkzeuges (20) in der ersten Richtung (D) zu induzieren, um eine komplexe Oberflachenform in der Oberfläche des Rohlings zu erzeugen.

4. Drehbank nach Anspruch 1 oder 2, dadurch **gekennzeichnet,** daß das digital-elektronische Mittel (6) Mittel darstellt, die dazu dienen, die Verschiehungsgeschwindigkeit des Schneidwerkzeuges (20) in der zweiten Richtung (D') relativ zu der Winkelverschiebungsgeschwindigkeit des Rohlings konstantzuhalten und die Verschiebung des Schneidwerkzeuges in der ersten Richtung (D) entsprechend der besonderen Form, die in der Oberfläche des Rohlings erzeugt wird, zu verändern.

5. Drehbank nach Anspruch 1 oder 2, dadurch **gekennzeichnet**, daß das digital-elektronische Mittel (6) Mittel darstellt, die dazu dienen, die Verschiebungsgeschwindigkeit des Schneidwerkzeuges (20) in der zweiten Richtung (D') zu verändern, wobei die Erzeuzungstätigkeit nur in einer Richtung zusätzlich zu der oszillierenden Bewegung des Schneidwerkzeuges in der ersten Richtung (D) erfolgt.

6. Drehbank nach Anspruch 1 oder 2, dadurch **gekennzeichnet**, daß das digital-elektronische Mittel (6) Mittel darstellt, die dazu dienen, die Winkelverschiebungsgeschwindigkeit des Rohlings proportional in bezug auf die Verschiebung des Schneidwerkzeuges (20) von der Drehachse des Rohlings zu verändern.

7. Drehbank nach einem der vorhergehenden Ansprüche, dadurch **gekennzeichnet**, daß jedes der ersten (2) und zweiten (3) Bewegungsmittel aufweist:
- zwei parallel angeordnete Schienen (9, 14) auf einem ersten Körper (7, 12) sowie zwei parallel angeordnete Führungen (12A, 15) auf einem zweiten Körper (12, 19), wobei die Schienen und die Führungen miteinander zusammenarbeiten, um die Bewegung nur auf eine Richtung zu begrenzen, wobei die Richtungen quer zueinander angeordnet sind;
- eine Antriebswelle (10, 13), die auf dem ersten Körper angebracht ist und durch einen Motor (11, 16) angetrieben wird, um die Antriebs- und Haltekraft für den zweiten Körper zu liefern; und
- ein Antriebsübertragungselement (11A), das auf dem zweiten Körper angebracht ist, um den Antrieb von der Antriebswelle auf den zweiten Körper zu übertragen.

8. Drehbank nach Anspruch 7, dadurch **gekennzeichnet**, daß die Antriebswelle (10, 13) eine mit einem Schraubengewinde versehene Antriebswelle ist.

9. Drehbank nach Anspruch 7 oder 8, dadurch **gekennzeichnet**, daß die Drehbank einen Hauptträgersockel (1) aufweist und das erste Bewegungsmittel (2) auf dem Trägersockel, der dessen ersten Körper darstellt, angebracht ist und der zweite Körper (12) des ersten Bewegungsmittels einen auf dem ersten Körper angeordneten Block aufweist; und daß das zweite Bewegungsmittel (3) auf dem Block, der den ersten Körper des zweiten Bewegungsmittels darstellt, angebracht ist und sein zweiter Körper (19) einen Halter des Schneidwerkzeuges (20) aufweist.

10. Drehbank nach einem der vorhergehenden Ansprüche, dadurch **gekennzeichnet**, daß das Schneidwerkzeug (20) einen Punktschneidekontakt mit dem Rohling bietet.

11. Drehbank nach Anspruch 10, dadurch **gekennzeichnet,** daß das Schneidwerkzeug (20) ein mit einer Diamantspitze versehenes Schneidwerkzeug ist.

12. Verfahren zum Betreiben einer Drehbank für die Herstellung von augenoptischen Produkten aus Rohlingen, mit den Schritten:
- einen Rohling um eine Drehachse zu drehen;
- eine Relativbewegung zwischen dem Schneidwerkzeug (20) und dem Rohling in einer ersten Richtung (D) zu bewirken, die parallel zu der Drehachse des Rohlings ausgerichtet ist;
- eine Relativbewegung zwischen dem Schneidwerkzeug und dem Rohling in einer zweiten Richtung (D') zu bewirken, die quer zu der ersten Richtung ausgerichtet ist; und
- Signale von einem digital-elektronischen Mittel (6) zuzuführen, um die Winkelverschiebung des Rohlings in bezug auf eine den Rohling enthaltende Referenzebene (P) und die Bewegung des Schneidwerkzeuges in der ersten und der zweiten Richtung zu steuern, wobei die Bewegungen des Schneidwerkzeuges in der ersten und der zweiten Richtung und die Winkelverschiebung des Rohlings um die Drehachse alle mit Hilfe von Steuersignalen, die in gleichmäßigen Zeitintervallen zugeführt werden, unabhängig voneinander gesteuert werden.

## Revendications

1. Tour pour générer des produits ophtalmiques à partir de flans, comportant :
des moyens (4) de rotation destinés à faire tourner un flan autour d'un axe de rotation ;
un outil de coupe (20) destiné à former une configuration de surface souhaitée sur le flan de rotation ;
un premier moyen (2) de déplacement destiné à effectuer un mouvement relatif entre ledit outil de coupe et le flan dans une première direction (D) orientée parallèlement audit axe de rotation du flan ;
un second moyen de déplacement (3) destiné à effectuer un mouvement relatif entre ledit outil de coupe et le flan dans une seconde direction (D') orientée transversalement à ladite première direction ; et
des moyens électroniques numériques (6) connectés auxdits moyens de rotation et auxdits premier et second moyens de déplacement pour fournir des signaux de commande commandant le déplacement angulaire du flan par rapport à un plan de référence (P) contenant le flan, et commandant le mouvement de l'outil de coupe dans lesdites première et seconde direction, de manière que les mouvements dudit outil de coupe le long desdites première et seconde directions et le déplacement angulaire du flan autour dudit axe de rotation soient tous commandés indépendamment les uns des autres au moyen de signaux de commande fournis à intervalles de temps réguliers.

2. Tour selon la revendication 1, dans lequel lesdites première (D) et seconde (D') directions sont orientées perpendiculairement l'une à l'autre.

3. Tour selon la revendication 1 ou 2, dans lequel lesdits moyens électroniques numériques (6) constituent un moyen pour induire un type de déplacement oscillant dans le mouvement dudit outil de coupe (1) dans ladite première direction (D) afin de générer une forme de surface complexe dans la surface du flan.

4. Tour selon la revendication 1 ou 2, dans lequel lesdits moyens électroniques numériques (6) constituent un moyen pour maintenir constante la vitesse de déplacement dudit outil de coupe (20) dans ladite seconde direction (D') par rapport à la vitesse de déplacement angulaire du flan, et pour faire varier le déplacement de l'outil de coupe dans ladite première direction (D) en fonction de la forme particulière générée dans la surface du flan.

5. Tour selon la revendication 1 ou 2, dans lequel lesdits moyens électroniques numériques (6) constituent un moyen pour faire varier la vitesse de déplacement dudit outil de coupe (20) dans ladite seconde direction (D') où l'action de génération n'a lieu que dans une direction, en plus du mouvement oscillant de l'outil de coupe dans la première direction (D).

6. Tour selon la revendication 1 ou 2, dans lequel lesdits moyens électroniques numériques (6) constituent un moyen pour faire varier la vitesse de déplacement angulaire du flan proportionnellement au déplacement de l'outil de coupe (20) à partir dudit axe de rotation du flan.

7. Tour selon l'une quelconque des revendications précédentes, dans lequel chacun desdits premier (2) et second (3) moyens de déplacement comporte :
deux rails (9, 14) disposés en parallèle sur un premier corps (7, 12) et deux guides (12A, 15) disposés en parallèle sur un second corps (12, 19), lesquels rails et guides interagissent entre eux pour limiter le mouvement à une seule direction, lesdites directions étant orientées transversalement l'une à l'autre ;
un arbre d'entraînement (10, 13) monté sur le premier corps, entraîné par un moteur (11, 16) pour fournir la force d'entraînement et de positionnement pour le second corps ; et
un élément (11A) de transmission de l'effort d'entraînement monté sur le second corps pour transférer l'effort d'entraînement de l'arbre d'entraînement au second corps.

8. Tour selon la revendication 7, dans lequel l'arbre d'entraînement (10, 13) est un arbre fileté d'entraînement.

9. Tour selon la revendication 7 ou 8, dans lequel le tour comprend une embase principale (1) de support et ledit premier moyen de déplacement (2) est monté sur ladite embase de support, laquelle embase de support en constitue ledit premier corps, et ledit second corps (12) dudit premier moyen de déplacement comporte un bloc placé sur ledit premier corps ; et ledit second moyen de déplacement (3) est monté sur ledit bloc, lequel bloc constitue ledit premier corps dudit second moyen de déplacement et le second corps (19) de celui-ci comporte un support dudit outil de coupe (20).

10. Tour selon l'une quelconque des revendications précédentes, dans lequel ledit outil de coupe (20) établit un contact de coupe ponctuel avec le flan.

11. Tour selon la revendication 10, dans lequel l'outil de coupe (20) est un outil de coupe (20) à pointe diamant.

12. Procédé de mise en oeuvre d'un tour pour générer des produits ophtalmiques à partir de flans, comprenant les étapes dans lesquelles :
on fait tourner un flan autour d'un axe de rotation ;
on effectue un mouvement relatif entre ledit outil de coupe (20) et le flan dans la première direction (D) orientée parallèlement audit axe de rotation du flan ;
on effectue un mouvement relatif entre ledit outil de coupe et le flan dans une seconde direction (D') orientée transversalement à ladite première direction ; et
on fournit des signaux à partir de moyens électroniques numériques (6) pour commander le déplacement angulaire du flan par rapport à un plan de référence (P) contenant le flan et pour commander le mouvement de l'outil de coupe dans lesdites première et second directions, grâce à quoi les mouvements dudit outil de coupe dans lesdites première et seconde directions et le déplacement angulaire du flan autour dudit axe de rotation sont tous commandés indépendamment les uns des autres au moyen de signaux de commande fournis à intervalles de temps réguliers.
